# EUROPEAN PATENT APPLICATION

(11) **EP 2 154 207 A1**
(43) Date of publication of application: **17.02.2010**
(21) Application number: 08290730.4
(22) Date of filing: 28.07.2008
(51) Int. Cl.: C09D 5/03, C09D 123/08, C09D 123/14

(54) **Powder coating composition for thermoplastic composites**

(71) Applicant: DUPONT POLYMER POWDERS SWITZERLAND SARL, 1630 Bulle (CH); E. I. Du Pont de Nemours and Company, Wilmington, DE 19898 (US)
(72) Inventor: Kelly, Mark Bernard, Texas, 77706 (US); Magnin, Olivier, 1005 Lausanne (CH); Granjou, Ludovic, 1800 Vevey (CH)
(74) Representative: Hirsch & Associés

(57) **Abstract**

The present invention provides a method for coating a thermoplastic composite comprising the steps of:
i) providing a thermoplastic powder composition comprising one or more functionalized polyolefins chosen among functionalized polyethylenes, functionalized polypropylenes, ethylene acid copolymers, ionomers, functionalized ethylene vinyl acetate (EVA) copolymers, functionalized ethylene alkyl (meth)acrylate copolymers and mixtures thereof, and
ii) applying the thermoplastic powder coating composition to the thermoplastic composite to form a powder coating on the thermoplastic composite.

The method according to the invention provides a strong adhesion of the thermoplastic powder coating onto the thermoplastic composite, a high scratch and scuff resistance as well as a surface appearance of a high quality finish and outdoor performance.

## Description

### Field of Invention

The present invention relates to the field of thermoplastic composites coated with a powder coating composition comprising a thermoplastic polymer that are particularly useful for body panels and other parts of vehicles.

### Background of the Invention

Panels are used in various applications, like for example body panels and parts for automotive, truck, recreational, lawn and garden vehicles, claddings of buildings and as visual displays in advertising activities. Such panels comprise a base layer usually made of metal that offers structural integrity and insulating value and an external layer which faces the environment. It is generally desirable that the external layer is scuff and scratch as well as abrasion resistant and has excellent optical properties. If used in outdoor applications, the panels have furthermore to be durably resistant to the different weathering conditions, like for example rain, extreme temperatures, humidity, exposure to UV and other kind of radiations.

With the aim of replacing the metal parts of such panels for weight saving while maintaining mechanical performance, structures based on plywood sheet materials have been developed. Plywood consists of a structural material based on sheets of wood that are glued or cemented together. Nevertheless, such structures are not only still too heavy but also they emit organic compounds such as for example formaldehyde-based products, which solution is environmentally unfriendly due to toxic exhalations.

For environmental reasons, there is a trend to use materials that emit low levels of organic volatiles and preferably no volatiles at all. For this reason, structures based on thermoplastic composite have been developed coated with a thermosetting polyester liquid gel for aesthetic purposes and for practical purposes such as mechanical protection. Nevertheless, such structures are not recyclable.

The thermoplastic composites should be coated with a suitable coating composition. Historically, thermoplastic resins have been evaluated in powder coating applications, and, among several properties, a strong adhesion of the coating to the thermoplastic composite, a high mechanical strength and good surface hardness, a high impact resistance, a high scratch resistance, a high abrasion resistance as well as a high aesthetical surface quality are of first interest.

US-A 2007/0036969 discloses an ethylene vinyl acetate (EVA) copolymer powder coated thermoplastic composite based on thermoplastic fiber material and glass fibers. The coating composition provides an excellent adhesion and improved covering of abrasive glass fibers.

Nevertheless, there remains a need for a composite coating providing an improved balance of physical and mechanical properties of the coated thermoplastic composite, wherein the coating is easy to produce and apply to the composite.

### Summary of the Invention

The present invention provides a method for coating a thermoplastic composite comprising the steps of:
i) providing a thermoplastic powder composition comprising one or more functionalized polyolefins chosen among functionalized polyethylenes, functionalized polypropylenes, ethylene acid copolymers, ionomers, functionalized ethylene vinyl acetate (EVA) copolymers, functionalized ethylene alkyl (meth)acrylate copolymers and mixtures thereof, and
ii) applying the thermoplastic powder coating composition to the thermoplastic composite to form a powder coating on the thermoplastic composite.

In a second aspect, the invention provides a thermoplastic composite coated with a thermoplastic powder coating composition comprising one or more functionalized polyolefins chosen among functionalized polyethylenes, functionalized polypropylenes, ethylene acid copolymers, ionomers, functionalized ethylene vinyl acetate (EVA) copolymers, functionalized ethylene alkyl (meth)acrylate copolymers and mixtures thereof.

In a third aspect, the invention provides an article comprising or made of the thermoplastic composite coated with the thermoplastic resin powder coating composition of the invention.

The method according to the invention provides a strong adhesion of the thermoplastic powder coating onto the thermoplastic composite, a high scratch and scuff resistance as well as a surface appearance of a high quality finish and outdoor performance.

### Detailed Description

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The use of numerical values in the various ranges specified in this application, unless expressly indicated otherwise, are stated as approximations as though the minimum and maximum values within the stated ranges. In this manner, slight variations above and below the stated ranges can be used to achieve substantially the same results as values within the ranges. Also, the disclosure of these ranges is intended as a continuous range including every value between the minimum and maximum values.

All patents, patent applications and publications referred to herein are incorporated by reference in their entirety.

The term thermoplastic is related to the fact that the polymer can be repeatedly, in opposition to thermosets, melted and solidified by heating and cooling without involving any important changes in properties.

The one or more polyolefins used in the thermoplastic powder coating composition of the present invention are one or more functionalized polyolefins, meaning that they grafted and/or copolymerized with organic functionalities. The one or more functionalized polyolefins used in the thermoplastic powder coating composition may be functionalized with acid, anhydride and/or epoxide functionalities.

Examples of the acids and anhydrides used to modify the polyolefin, which may be mono-, di- or polycarboxylic acids are acrylic acid, methacrylic acid, maleic acid, fumaric acid, fumaric acid, itaconic acid, crotonic acid, itaconic anhydride, maleic anhydride and substituted maleic anhydride, e.g. dimethyl maleic anhydride or citrotonic anhydride, nadic anhydride, nadic methyl anhydride, and tetrahydrophthalic anhydride, or combinations of two or more thereof, maleic anhydride being preferred. Examples of epoxides used to functionalize polyolefins are unsaturated epoxides comprising from four to eleven carbon atoms, such as glycidyl (meth)acrylate, allyl glycidyl ether, vinyl glycidyl ether and glycidyl itaconate, glycidyl (meth)acrylates being particularly preferred.

When one or more acid-functionalized polyolefins are used, they preferably contain from 0.05 to 25 wt-% of an acid, the weight % being based on the total weight of the functionalized polyolefin.

When one or more anhydride-functionalized polyolefins are used, they preferably contain from 0.05 to 10 wt-% of an anhydride, the weight percentage being based on the total weight of the functionalized polyolefin.

When one or more epoxide-functionalized polyolefins are used, they preferably contain from 0.05 to 15 wt-% of an epoxide, the weight percentage being based on the total weight of the functionalized polyolefin.

The one or more functionalized polyolefins are chosen among functionalized polyethylenes, functionalized polypropylenes, ethylene acid copolymers, ionomers, functionalized ethylene vinyl acetate copolymers, and functionalized ethylene alkyl (meth)acrylate and mixtures thereof.

The term (meth)acrylate is respectively intended to mean acrylate and/or methacrylate.

Polyethylenes used for preparing functionalized polyolefins are commonly available polyethylene resins selected from ultra low density polyethylene (ULDPE), very low density polyethylene (VLDPE), low density polyethylene (LDPE), linear low density polyethylene (LLPE), high density polyethylene (HDPE), known to those skilled in the art, metallocene polyethylene (mPE) and copolymers such as for example ethylene propylene copolymers and copolymers based on ethylene, propylene and EPDM. EPDM is a terpolymer of ethylene, at least one alpha-olefin, and a copolymerizable non-conjugated diene such as norbornadiene, 5-ethylidene-2-norbornene, dicyclopentadiene, 1,4-hexadiene and the like.

Polypropylenes used for preparing functionalized polyolefins include homopolymers, random copolymers, block copolymers and terpolymers of propylene, known to those skilled in the art. Copolymers of propylene include copolymers of propylene with other olefins such as 1-butene, 2-butene and the various pentene isomers. Ethylene alpha-olefins copolymers comprise ethylene and one or more alpha-olefins. Examples of alpha-olefins include but are not limited to propylene, 1-butene, 1-pentene, 1-hexene-1, 4-methyl 1-pentene, 1-heptene, 1-octene, 1-nonene, 1-decene, 1-undecene and 1-dodecene.

Ethylene acid copolymers are made via free radical polymerization of ethylene and of one or more α,β-ethylenically unsaturated carboxylic acids comprising from 3 to 8 carbon atoms such as acrylic acid (AA), methacrylic acid (MAA) or maleic acid monoethylester (MAME). The ethylene acid copolymers may optionally contain a third monomer, which is a softening monomer. The term softening monomer is known to those skilled in the art and is used for softening polymers/copolymers. This softening monomer can decrease the crystallinity of the ethylene acid copolymer. Suitable softening monomers are selected, for example, from alkyl acrylates and alkyl methacrylates, wherein the alkyl groups have from 1 to 8 carbon atoms.

The ethylene acid copolymers can thus be described as E/X/Y copolymers, wherein E represents copolymerized units of ethylene, X represents copolymerized units of the α,β-ethylenically unsaturated carboxylic acid, and Y represents copolymerized units of the softening monomer. The amount of X in the ethylene acid copolymer is from 1 to 30 wt-%, preferably from 9 to 25 wt-%, more preferably from 12 to 22 wt-%, and the amount of Y is from 0 to 30 wt-%, preferably 2 to 15 wt-%, more preferably from 4 to 12 wt-%, based on the total weight of the ethylene acid copolymer. The remainder of the copolymer comprises or consists essentially of copolymerized units of ethylene.

Alternatively, softening of ethylene acid copolymers can be done by adding one or more ethylene alkyl (meth)acrylate copolymers to the ethylene acid copolymers.

Preferred are ethylene acid copolymers in which Y is 0% of the copolymer. Therefore, E/X dipolymers comprising copolymerized residues of ethylene and of one or more α,β-ethylenically unsaturated carboxylic acids comprising from 3 to 8 carbon atoms are preferred. Specific examples of these preferred ethylene acid copolymers include, without limitation, ethylene acrylic acid copolymer (EAA), ethylene methacrylic acid copolymer (EMAA) ethylene maleic acid monoethylester copolymer (EMAME) or mixtures thereof.

Methods of preparing ethylene acid copolymers are known to those skilled in the art. Ethylene acid copolymers can be prepared in continuous polymerizers by use of "co-solvent technology" as described in US 5,028,674 or by employing somewhat higher pressures than those at which copolymers with lower acid can be prepared.

Ionomers suitable according to this invention are ethylene acid copolymers described above that contain metal ions in addition to the organic backbone. Such ionomers can be, for example, ionic copolymers of an olefin such as ethylene with partially neutralized α,β-unsaturated C₃-C₈ carboxylic acid.

Preferably, the acid copolymer is acrylic acid (AA) or methacrylic acid (MAA). Suitable ionomers can be prepared from the ethylene acid copolymers described above. Compounds suitable for neutralizing an ethylene acid copolymer include ionic compounds having basic anions and alkali metal cations (for example, lithium or sodium or potassium ions), transition metal cations (for example, zinc ion) or alkaline earth metal cations (for example magnesium or calcium ions) and mixtures or combinations of such cations. Ionic compounds that may be used for neutralizing the ethylene acid copolymers include alkali metal formates, acetates, nitrates, carbonates, hydrogen carbonates, oxides, hydroxides or alkoxides. Other useful ionic compounds include alkaline earth metal formates, acetates, nitrates, oxides, hydroxides or alkoxides of alkaline earth metals. Transition metal formates, acetates, nitrates, carbonates, hydrogen carbonates, oxides, hydroxides or alkoxides may also be used. Preferably, neutralizing agents are chosen among sources of sodium ions, potassium ions, zinc ions, magnesium ions, lithium ions, transition metal ions, alkaline earth metal cations and combinations of two or more thereof; more preferably zinc ions and combination of zinc ions, and still more preferably a combination of zinc ions and sodium ions or zinc ions and lithium ions.

The acid groups of the ionomer comprised in the present invention are neutralized in a range of 10 to 90%, preferably 25 to 50 wt-% and more preferably 20 to 40 wt-%. The total amount of acid monomer and neutralized acid monomer in the ionomers preferably between 12 and 25 wt-%, more preferably between 14 and 22 wt-%, and more preferably between 15 and 20 wt-%, the weight percentage being based on the total weight of the ionomer.

In analogy with the ethylene acid copolymers, ionomers can be described as E/X/Y copolymers where E is an olefin such as ethylene, X is a α,β-unsaturated C₃-C₈ carboxylic acid, and Y is a softening monomer, wherein X is from 12 to 25 wt-%, preferably from 14 to 22 wt-% of the E/X/Y copolymer and Y can be present in an amount of from about 0 to 30 wt-% of the E/X/Y copolymer, wherein the carboxylic acid functionalities are at least partially neutralized.

Alternatively, softening of the ionomers can be done by adding one or more ethylene alkyl (meth)acrylate copolymers to the ionomers.

Ionomers and their methods of manufacture are described for example in US 3,264,272.

Functionalized ethylene vinyl acetate copolymers in the thermoplastic powder coating composition of the present invention preferably comprise a relative amount of copolymerized vinyl acetate units from 5 to 40 wt-%, more preferably from 10 to 30 wt-% and still more preferably from 15 to 25 wt-%, the weight percentage being based on the total weight of the functionalized polyolefin. A mixture of two or more different ethylene vinyl acetate copolymers can be used as components of the functionalized polyolefin.

Ethylene alkyl (meth)acrylate copolymers are thermoplastic ethylene copolymers derived from the copolymerization of ethylene comonomer and at least one alkyl (meth)acrylate comonomer. "Alkyl (meth)acrylate" refers to alkyl acrylate and/or alkyl methacrylate. The alkyl group of the ethylene alkyl (meth)acrylate copolymer contains from one to ten carbon atoms and preferably from one to four carbon atoms, i.e. preferred copolymers are ethylene methyl (meth)acrylate copolymers, ethylene ethyl (meth)acrylate copolymers, ethylene butyl (meth)acrylate copolymers. Functionalized ethylene alkyl (meth)acrylate in the thermoplastic powder coating composition of the present invention preferably comprise a relative amount of copolymerized alkyl (meth)acrylate units from 0.1 to 45 wt-%, preferably from 5 to 35 wt-% and still more preferably from 8 to 28 wt-%, the weight percentage being based on the total weight of the functionalized polyolefin.

The one or more functionalized polyolefins used in the thermoplastic powder composition desirably have a combination of melt flow index and particle size. Melt flow index should be high enough for the powder to melt, flow and diffuse sufficiently during heating while still low enough for having a surface aspect of the coated thermoplastic composite. For powder coating applications, suitable functionalized polyolefin copolymer have a melt flow index (MFI) less than 300 grams/10 min, preferably from 0.1 to 200 grams /10 min, and still more preferably from 2 to 40 grams/min, as measured by ASTM Method No. D1238 at 190°C using a 2160 g weight.

Melt flow index is an indication of the viscosity of the melt polymer and its ability to form an even coating, and can be measured according to ASTM Method No. D 1238 at 190°C using a 2160 g weight.

The thermoplastic powder coating composition may comprise further ingredients such as pigments and/or other coloring agents, tackifiers, fillers, extenders, modifiers and/or other additives known to those skilled in the art. These ingredients may be present in the composition in amounts and in forms well known in the art.

Pigments or other coloring agents can be transparent, color-imparting and/or special effect-imparting pigments. Suitable color-imparting pigments are any conventional coating pigments of an organic or inorganic nature. Examples of inorganic or organic color-imparting pigments include without limitation titanium dioxide, micronized titanium dioxide, carbon black, azopigments, and phthalocyanine pigments. Examples of special effect-imparting pigments are metal pigments, for example, made from aluminum, copper or other metals, interference pigments, such as, metal oxide coated metal pigments and coated mica. Pigments or other coloring agents may be present in the composition in an amount up to 20 wt-%, preferably from 1 to 15 wt-%, and more preferably from 1 to 10 wt-%, the weight percentage being based on the total weight of the thermoplastic powder coating composition.

The tackifier (also called tackifying resins) may be any suitable tackifier known generally in the art. For example, the tackifier may include, but is not limited to, classes listed in US 3,484,405. Such tackifiers may include rosin materials as well as a variety of natural and synthetic resins different from the polyolefins of the invention. Tackifier resins that can be employed are liquid, semi-solid to solid, complex amorphous materials generally in the form of mixtures of organic compounds having no definite melting point and no tendency to crystallize. Such resins may be insoluble in water and can be of vegetable or animal origin, or can be synthetic resins. A comprehensive listing of tackifiers that can be employed in this invention is provided in the TAPPI CA Report No.55, February 1975, pages 13-20, a publication of the Technical Association of the Pulp and Paper Industry, Atlanta, Georgia, which lists over 200 commercially available tackifiers. The one or more tackifiers may be present in the composition in an amount form 0.1 to 20 wt-% and preferably from 5 to 15 wt-%, the weight percentage being based on the total weight of the thermoplastic powder coating composition.

Examples of fillers and/or extenders include without limitation silicon dioxide, silicate, such as, aluminum silicate, barium sulfate, calcium carbonate, magnesium carbonate and double carbonates of them.

Modifiers and other additives include without limitation, plasticizers, impact modifiers, stabilizers including viscosity stabilizers and hydrolytic stabilizers, lubricants, antioxidants, UV light stabilizers, antifog agents, antistatic agents, flame retardant agents, and processing aids known in powder coating art like such as example antiblock agents, release agents, flow-control agents, flatting agents, and catalysts.

The thermoplastic powder coating composition of the invention can be first prepared as pellets and/or granulates by combining the components of the composition by using any melt-mixing known in the art. For example, the polymeric components and non-polymeric ingredients of the composition may be added to a melt mixer, such as, for example, a single or twin-screw extruder; a blender, a single or twin-screw kneader, a Haake mixer, a Brabender mixer, a Banbury mixer, or a roll mixer, either all at once through a single step addition, or in a stepwise fashion, and then melt-mixed. When adding the components of the composition in a stepwise fashion, a part of the components of the composition are first added and melt-mixed with the remaining the components of the composition being subsequently added and further melt-mixed until a well-mixed composition is obtained. The extrusion method is well known to those skilled in the art.

Then, the compounded pellets and/or granulates so-obtained are sized to a fine powder by using methods known in the art of micronizing. This means, the extruded material is granulated and then ground at room temperature or at low temperature to a fine powder, which can be classified to the desired grain size. For example, the compounded pellets are cooled at low temperatures, preferably between -120 to -200°C and more preferably between -140 to -180°C. Preferably, cryogenically grinding using liquid nitrogen as a cooling medium is used. The brittle extra-cold granules are then fed into a grinder that reduces the granules to fine particles by using, for example, an impact or attrition milling process known by a person skilled in the art. The milling technique is selected by the person skilled in the art in function of the ductility of the compounded pellet to grind and the final particle size distribution targeted. For obtaining desired size, the grinding step is associated with a sieving step for eliminating the large particles and the fine size particles. Preferably, the thermoplastic powder coating composition used in the present invention has a particle size (D90 value) less than or equal to 800 µm, more preferably less than or equal to 600 µm and more preferably between 125 and 400 µm. The D90 value corresponds to a particle size below which 90 wt-% of the particles lie, wherein the particle size analysis is done by a laser diffraction method and meets the standards set forth in ISO 3310-1. Measurements were done on a Malvern Mastersizer 2000.

Furthermore, specific components of the composition according to the invention, for example, additives, pigment, extenders, may be processed with the finished powder coating particles after extrusion and grinding by a "dryblending" process, the process known to those skilled in the art.

Furthermore, specific components of the composition according to the invention, for example, additives, pigment, extenders, may be processed with the finished powder coating particles after extrusion and grinding by a "bonding" process using an impact fusion. For this purpose, the specific components may be mixed with the powder coating particles. During blending, the individual powder coating particles are treated to softening their surface so that the components adhere to them and are homogeneously bonded with the surface of the powder coating particles. The softening of the powder particles surface may be done by heat treating the particles to a temperature, e.g. the glass transition temperature Tg of the powder coating composition, in a range, of e.g., 50 to 60°C. After cooling the mixture the desired particle size of the resulted particles may be proceed by a sieving process.

The thermoplastic composite can be made from thermoplastic fibre material, but also from a mixture of a thermoplastic material and reinforcing fibers or filaments. Reinforcing fibers or filaments may chosen among glass, metal, aramid, carbon, graphite, boron, resins, epoxies, polyamides, polyolefins, silicones, polyurethanes and mixtures thereof, glass being preferred. The thermoplastic material may be chosen among polyolefin such as for example polyethylene and/or polypropylene, polyesters, polyamides and mixtures thereof. For example, the thermoplastic composite can be made from a mixture of a thermoplastic material and reinforcing fibers or filaments in a ratio of 60:40 to 10:90.

Preferably, the thermoplastic composite used in the present invention is a fabric made of filaments that are formed from commingled thermoplastic fibers and glass fibers. The thermoplastic composite made of homogenous commingled glass fibers and thermoplastic fibers combine the excellent mechanical properties of continuous glass fiber-reinforced materials with the processing ease of thermoplastic materials. More preferably, the thermoplastic composite used in the present invention is a fabric made of filaments that are formed from commingled polyolefin fibers and glass fibers and still more preferably, it is made of filaments that are formed from commingled polypropylene fibers and glass fibers. Preferably, the glass fibers used are E-glass fibers. Preferably, the thermoplastic composite is made from a mixture of a thermoplastic material and glass fibers in a ratio in a range of 60:40 to 10:90. Preferably the thermoplastic material is polypropylene.

Suitable examples of thermoplastic composite for use in the present invention are commercially available from Owens Corning-Vetrotex under the trademark Twintex^{®}.

The thermoplastic powder coating composition of this invention may be applied onto the thermoplastic composite by scattering, sprinkling, spraying, thermal or flame spraying, or fluidized bed coating methods, all of which are known to those skilled in the art.

After having applied the thermoplastic powder coating composition of the invention onto the thermoplastic composite, the system is submitted to heat and pressure so as to allow the thermoplastic powder coating composition to melt and flow through the thermoplastic composite and, therefore, to impregnate and coat it. Heating is achieved at a temperature above the melting range of the powder coating composition, in a temperature range of 80 to 220°C, dependent on the kind of the thermoplastic composite. The heating step may be done by gas or air heating, and/or IR or NIR as known in the art, to finish the coating on the thermoplastic composite and to improve the surface appearance of the coating. Examples of coating process include without limitation vacuum moulding (also called in-mold coating), lamination, thermoforming stamping or diaphragm forming. In-mold coating and lamination processes are preferred. During lamination, after having applied the thermoplastic powder coating composition to the thermoplastic composite, heat and pressure are accomplished by passing the powdered thermoplastic composite through opposing pressured rollers in a heating zone, such a technique is also known as flatbed lamination. During in-mold coating, a mold presenting a mold surface is employed. This mold surface defines a configuration complementing the desired configuration of the final article to be manufactured. The thermoplastic powder coating composition is applied onto the mold surface, the thermoplastic composite is laid onto the powder and the powdered thermoplastic composite is heated and drawn up (sucked up) to the shape of the mold by vacuum.

The thermoplastic powder coating composition may be applied to the thermoplastic composite as a first coat or as a coating layer in a multilayer structure, which multilayer structure comprises a thermoplastic composite coated with the thermoplastic powder coating composition described above and at least one additional layer. Preferably, the thermoplastic powder coating composition is applied as first coating layer directly onto the thermoplastic composite. When used as a first coating layer directly onto the thermoplastic composite, the thermoplastic powder coating composition preferably comprises one or more ionomers.

According to another embodiment of the present invention, the thermoplastic composite coated with the thermoplastic powder coating composition of the invention may be printed so as to provide information or to provide a pleasing appearance of the coated thermoplastic composite. Printing structures could be useful in order to provide information about the product and/or to provide a pleasing appearance of the structure. By "printed", it is meant impressed with a "mark, design, lettering or pattern". The mark, design, lettering or pattern may be coloured or uncoloured, thus printing includes visibly marking and also embossing, treating, and the like. The choice of ink and printing may be made by one of the skill in the art according to established criteria such as economic factors, compatibility of ink with the structure, level of detail of the design to be printed and the like.

For outdoor applications, thermoplastic composites have furthermore to be resistant to the different weathering conditions, like for example extreme temperatures, humidity, exposure to UV and other kind of radiations. Under such conditions, it is preferred that the thermoplastic powder coating composition of the invention is applied to the thermoplastic composite surface as coating layer in a multilayer structure, which multilayer structure comprises a thermoplastic composite coated with the thermoplastic powder coating composition of the invention and at least one additional layer. Examples of material that can be used for the at least one additional layer may include without limitation ethylene copolymers or ionomers. Preferably, the at least one additional layer is a layer comprising one or more ionomers. Such ionomers can be the same ionomers as described above.

Preferably and with the aim of providing adequate weathering protection for several years of exterior exposure, the at least one additional layer is a clear layer. However, the at least one additional clear layer may contain pigments that are transparent or have the same refractive index as the one or more ionomers making the layer appear clear. The term refractive index is known to those skilled in the art. The at least one additional clear layer may further comprise modifiers and other ingredients, including, without limitation, UV absorbers and stabilizers, antioxidant and thermal stabilizers, fillers, anti-slip agents, plasticizers, nucleating agents, and the like. These modifiers and other ingredients may be present in amounts from 0.5 to 3.0 wt-%, preferably from 1.0 to 2.0 wt-%, the weight percentage being based on the total weight of the at least one additional layer. The coated thermoplastic composite comprising at least one additional clear layer can be manufactured by a single process which may include powder coating, laminating or extrusion coating the at least one additional layer onto the thermoplastic composite that has been previously coated with the thermoplastic powder coating composition comprising one or more functionalized polyolefins described above.

Preferably, the thickness of the at least one additional layer is between 100 and 600 µm, more preferably between 125 and 350 µm.

According to another embodiment of the present invention, the at least one additional layer is a multilayer structure comprising a first layer, which is a clear layer, comprising one or more ionomers as described above and at least one second layer, wherein the first clear layer faces the environment and the at least one second layer is adjacent to the coated thermoplastic composite. The at least one second layer may be colored and/or pigmented or may be printed so as to provide information or to provide a pleasing appearance of the coated thermoplastic composite. Such at least one second layer can be a polymeric film, paper, board, a woven fabric, a non-woven fabric and combinations thereof. Preferably, the at least one second layer which is colored and/or pigmented or printed is a film comprising one or more ionomers.

In another aspect, the present invention relates to an article comprising or made of the thermoplastic composite that has been coated with the thermoplastic powder coating composition as described above and to a method for manufacturing the article. Such articles may be manufactured by shaping the thermoplastic composite coated with the thermoplastic resin powder coating composition by any process commonly known in the art. Examples of articles are any article to be used for any applications wherein scuff, scratch and abrasion resistance, durably resistance to the different weathering conditions, and good surface appearance are needed. The article may be used to form various intermediate and final form articles, including without limitation articles for use in vehicular applications, construction articles or advertising articles. Examples of vehicular applications include without limitation motor panels, side wall panels for vehicles including recreational vehicles (e.g. trailers, motor homes, and the like), trucks, lawn and garden vehicles and automobiles, as well as rail, marine and air/aerospace vehicles, cargo liners and container panel and substrates, and the like. Examples of construction articles include without limitation building panels and visual displays. Examples of advertising articles include without limitation flagpoles.

When used for vehicular applications and especially as side wall panels for vehicles including recreational vehicles, the coated thermoplastic composite according to the present invention may further comprise a core layer. Depending on the end-use application, the core layer can be made of any materials which may, for example, improve the performance of the product such as for example mechanical properties, vibration and/or sound dampening or thermal insulation. Examples of materials include without limitation expanded thermoplastic materials, such as for example expanded polyethylene, expanded polypropylene and expanded polystyrene; expanded thermosetting resins such as for example polyurethane foams and polyisocyanurate foams; or fibrous materials; expanded thermoplastic materials being preferred and expanded polystyrene being especially preferred. When the thermoplastic powder coating composition is applied to the thermoplastic composite surface as coating layer in a multilayer structure, which multilayer structure comprises a thermoplastic composite coated with the thermoplastic powder coating composition described above and at least one additional layer, the core layer is adjacent to the thermoplastic powder coated thermoplastic composite and the at least one additional layer is facing the environment. Should the adhesion between the core layer and the at least one thermoplastic composite coated with the thermoplastic powder coating composition of the invention and/or at least one of multilayer structure be insufficient, a layer of a conventional adhesive may be applied between the different parts of the final structure.

Examples of structures comprising a core layer and at least one thermoplastic composite coated with the thermoplastic powder coating composition of the invention include without limitation:
- a core layer/a first thermoplastic composite coated with the thermoplastic powder coating composition;
- a first thermoplastic composite coated with the thermoplastic powder coating composition/a core layer/a second thermoplastic composites coated with the thermoplastic powder coating composition;
- a core layer/a first thermoplastic composite coated with the thermoplastic powder coating composition/at least one additional layer;
- a first thermoplastic composite coated with the thermoplastic powder coating composition/a core layer/a second thermoplastic composites coated with the thermoplastic powder coating composition/ at least one additional layer; or
- at least one additional layer/a first thermoplastic composite coated with the thermoplastic powder coating composition/a core layer/a second thermoplastic composites coated with the thermoplastic powder coating composition/ at least one additional layer.

In comparison with thermoplastic composites coated with thermosets of the state of the art, the coated thermoplastic composite of the present invention are completely and easily recyclable and, therefore, their use constitutes an environmentally friendly alternative to the use of coating based on thermosets. In addition to the recyclability of the whole structure, the thermoplastic powder coating composition can be easily remelted for easy repair or touch-up.

In comparison with the coated thermoplastic composites of the state of the art, the thermoplastic powdered coated thermoplastic composite according to the present invention exhibit superior performance due to the strong interlocking and chemical bonding between the powder coating material and the thermoplastic composite thus contributing to a strong and durable adhesion. Because of their performance properties, the absence of emitted organic volatiles and their recyclability, thermoplastic powdered coated thermoplastic composite according to the present invention are an excellent environmentally friendly solution for any application where a high aesthetical surface quality, such as for example a smooth and glossy surface, a high scratch and abrasion resistance and weatherability resistance are highly desired.

The present invention is further defined in the following Examples. It should be understood that these Examples are given by way of illustration only. From the above discussion and these Examples, one skilled in the art can ascertain the essential characteristics of this invention, and without departing from the spirit and scope thereof, can make various changes and modifications of the invention to adapt it to various uses and conditions. As a result, the present invention is not limited by the illustrative examples set forth herein below, but rather is defined by the claims contained herein below.

### Examples

The following materials were used for preparing the thermoplastic composite coated with a thermoplastic powder coating composition according to the invention and comparative multilayer film structures.

### Example 1

### Thermoplastic powder coating composition of the invention

| | |
|---|---|
| lonomer 19 wt% methacrylic acid (MAA), 30% neutralized with sodium and zinc cations in a ratio 25/75 MFI: 27 g/10 min | 89.7 wt-% |
| TiO₂ as pigment | 6 wt-% |
| UV and thermal stabilizer | 1.3 wt-% |
| Flow agent | 3 wt-% |

| | |
|---|---|
| MFI measured according ASTM Method No. D1238 at 190°C using a 2160 g weight. | |

The ingredients of the thermoplastic powder coating composition were mixed together by dry-mixing and then by melt mixing using an extruder at a temperature of 140 to 190° C. After cooling, the compounded pellets were ground by micronisation and sieved to particles having a D90 value less than 400 µm as measured with a laser diffraction method and meeting the standards set forth in ISO 3310-1(Malvern Mastersizer 2000).

### Example 2

### Thermoplastic powder coating process

The thermoplastic powder coating composition of Example 1 was scattered onto a thermoplastic composite consisting of a fabric made of filament winding of polypropylene fibers and glass fibers in a ratio of the polypropylene fibers and glass fibers of 1:3, supplied by Owens Corning-Vetrotex, France. The resulted powdered thermoplastic composite entered into a flatbed laminating machine wherein a pair of pressure rollers applied linear pressure so as to embed the thermoplastic powder on the thermoplastic composite at a temperature between 180 and 220°C, and a pressure between 2 and 5 bars.

### Example 3:

### Mechanical performance measurements

**Table 1:**

| **Adhesion¹** | **Impact Resistance²** | **Abrasion Resistance³** | **Shore D⁴** |
|---|---|---|---|
| >20 [N/cm] | >10 [J] | < 10 [mg/1000 cycles] | > 60 |

| | | | |
|---|---|---|---|
| 1 Adhesion: ASTM D 429 2 Impact Resistance: ASTM D 2794 3 Abrasion Resistance: (Taber, 1000g, CS10 wheels): ASTM D 4060 4 Shore D: ASTM D 2240 | | | |

## Claims

1. A method for coating a thermoplastic composite comprising the steps of:
i) providing a thermoplastic powder coating composition comprising one or more functionalized polyolefins chosen among functionalized polyethylenes, functionalized polypropylenes, ethylene acid copolymers, ionomers, functionalized ethylene vinyl acetate (EVA) copolymers, functionalized ethylene alkyl (meth)acrylate copolymers and mixtures thereof, and
ii) applying the thermoplastic powder composition to the thermoplastic composite to form a powder coating on the thermoplastic composite.

2. The method according to claim 1, wherein the thermoplastic composite is made from a mixture of a thermoplastic material and glass fiber material in a ratio of 60:40 to 10:90.

3. The method according to claims 1 and 2, wherein the thermoplastic material is polypropylene.

4. The method according to any preceding claim, wherein the one or more functionalized polyolefins of the thermoplastic powder coating composition are colored.

5. The method according to any preceding claim, wherein the thermoplastic polymer of the powder coating composition has a melt flow index less than 500 g/10 min according to ASTM Method No. D1238 at 190°C and a load of 2160 g.

6. The method according to any preceding claim, wherein the thermoplastic polymer of the powder coating composition has a particle size (D90 value) less than or equal to 800 µm.

7. The method according to any preceding claim, wherein the thermoplastic polymer of the powder coating composition comprises one or more ionomers.

8. The method according to any preceding claim, further comprising the step of adding at least one additional layer comprising one or more ethylene copolymers and/or ionomers.

9. The method according to claims 8, wherein the at least one additional layer is a clear layer.

10. An article comprising a thermoplastic composite coated with the process according to 1 to 9.

11. The article according to claim 10, wherein the article is an article for use in vehicular applications, a construction article or an advertising article.
